(19) Europäisches Patentamt
European Patent Office
Office européen des brevets

(11) **EP 1 652 887 B1**

(12) **FASCICULE DE BREVET EUROPEEN**

(45) Date de publication et mention de la délivrance du brevet:
**31.10.2012 Bulletin 2012/44**

(51) Int Cl.:
*C08L 77/00* (2006.01)   *C08L 77/02* (2006.01)
*C08L 77/06* (2006.01)   *B32B 1/08* (2006.01)
*B32B 27/34* (2006.01)

(21) Numéro de dépôt: **06001390.1**

(22) Date de dépôt: **14.02.2003**

(54) **Composition à base de polyamide pour des tuyaux flexibles contenant du pétrole ou du gaz**

Zusammensetzung aus Polyamid zur Herstellung von flexiblen, Öl- oder Gas enthaltenden Rohren

Polyamide-based composition for the making of flexible hoses containing oil or gas

(84) Etats contractants désignés:
**AT BE BG CH CY CZ DE DK EE ES FI FR GB GR HU IE IT LI LU MC NL PT SE SI SK TR**

(30) Priorité: **04.03.2002 FR 0202689**

(43) Date de publication de la demande:
**03.05.2006 Bulletin 2006/18**

(62) Numéro(s) de document de la (des) demande(s) initiale(s) en application de l'article 76 CBE:
**03290360.1 / 1 342 754**

(73) Titulaire: **ARKEMA FRANCE**
**92700 Colombes (FR)**

(72) Inventeurs:
• **Jacques, Bernard**
**1428 Lillois (BE)**
• **Pees, Bernard**
**27800 Brionne (FR)**
• **Werth, Michaël**
**27300 Bernay (FR)**

(74) Mandataire: **Delprat, Corinne et al**
**ARKEMA FRANCE**
**Département Propriété Industrielle**
**420, rue d'Estienne d'Orves**
**92705 Colombes Cedex (FR)**

(56) Documents cités:
**EP-A1- 1 038 921     WO-A-89/03861**
**WO-A-99/33908**

• **L. BOTTENBRUCH, R.BINSACK: "TECHNISCHE THERMOPLASTE POLYAMIDE KUNSTSTOFF HANDBUCH 3/4" 1998, CARL HANSER VERLAG MÜNCHEN , XP002438465 * page 650, alinéa 4.3.1 - page 651 * * page 652, alinéa 4.4 - page 654 ***
• **I. KOHAN: "NYLON PLASTIC HANDBOOK" 1995, HANSER PUBLISHERS , XP002438466 * page 576, alinéa 13.11.1 - page 577 ***

EP 1 652 887 B1

**Description**

*Domaine de l'invention*

La présente invention concerne une composition à base de polyamide pour des tuyaux flexibles contenant du pétrole ou du gaz. Dans l'exploitation des gisements de pétrole ou de gaz sous la mer (off shore) il est nécessaire d'utiliser des tuyaux flexibles pour relier les différents dispositifs autour de la plateforme. Ces tuyaux doivent résister au pétrole chaud, au gaz, à l'eau et aux mélanges d'au moins deux de ces produits pendant des durées pouvant atteindre 20 ans. Ces tuyaux sont en général constitués d'une couche intérieure métallique non étanche formée par une bande en métal profilée enroulée en hélice telle qu'un feuillard agrafé et qui donne la forme au tuyau, puis sur cette couche on extrude un polymère pour donner l'étanchéité et enfin on ajoute d'autres couches de protection et de renfort telles que des nappes de fibres métalliques et des caoutchoucs. Pour des températures de service en dessous de 40°C le polymère est du HDPE (polyéthylène haute densité), jusqu'à 90°C c'est du polyamide et au delà jusqu'à 130°C c'est du PVDF (polyfluorure de vinylidène). La présente invention concerne les tuyaux dans lesquels le polymère est du polyamide. On a mis au point une nouvelle composition à base de polyamide qui présente une meilleure résistance au vieillissement. Elle peut aussi être utilisée dans d'autres applications en particulier dans l'automobile.

*l'art antérieur et le problème technique*

Le brevet US 4950436 décrit des tuyaux pour les fluides d'un système d'air conditionné comprenant une couche intérieure en polyamide contenant éventuellement des polyoléfines telles que du PE (polyéthylène), du PP (polypropylène) ou de l'EPR (caoutchouc éthylène propylène) puis, en allant vers l'extérieur du tube, une couche de caoutchouc puis enfin des couches de renfort en textile.

Le brevet DE 4132123 décrit des tuyaux pour la même application que le brevet précédent comprenant une couche intérieure en polyamide contenant des caoutchoucs acryliques pouvant être des copolymères d'un ester acrylique et d'acrylonitrile puis en allant vers l'extérieur du tube, une couche de renfort en textile et enfin une couche extérieure en caoutchouc pouvant être du NBR (abréviation du caoutchouc nitrile butadiène).

Le brevet FR 1592857 décrit des mélanges de polyamides, de caoutchouc nitrile et de plastifiant. La nature du caoutchouc nitrile n'est pas précisée. La plupart des exemples concernent des mélanges à base d'un copolyamide de température de fusion 120°C. L'exemple 3 décrit des mélanges de 75 parties de PA 6, 25 parties de caoutchouc nitrile et 30 à 52 parties de resorcinol comme plastifiant. Ces mélanges sont utiles comme adhésifs.

Le brevet DE 3439312 décrit des tuyaux pour les fluides d'un système d'air conditionné constitués d'une couche intérieure qui est un mélange de 30 à 70% (de préférence 40 à 60) en poids polyamide et de 70 à 30% (de préférence 60 à 40) de caoutchouc et d'une couche extérieure en polyoléfine ayant des groupes fonctionnels pour adhérer sur la couche intérieure. Le caoutchouc peut être du NBR.

Le brevet US 4567238 décrit des tuyaux constitués d'un mélange de polyamide et d'un mélange d'un caoutchouc NBR portant des fonctions époxy avec un caoutchouc épichlorhydrine (c'est à dire un caoutchouc contenant des fonctions ether) et un diacide pour réticuler les caoutchoucs. L'exemple le plus riche en polyamide contient 80% de PA 12, 10% de NBR ayant des fonctions époxy et de caoutchouc Hydrin décrit comme un copolymère d'épichlorhydrine et d'oxyde d'éthylène.

WO 89/03861 A décrit une composition polyamide comprenant (i) de 50 à 90% en poids d'un polyamide 11, (ii) de 10 à 40% en poids d'un élastomère NBR, (iii) de 2 à 20% en poids d'un plastifiant de type BBSA et (iv) de 5 à 50% en poids d'un caoutchouc réactif contenant des groupes polyamide.

Aucun de ces art antérieurs ne concerne les tuyaux pour l'off shore ni leur vieillissement sous l'effet de la température ou du contact avec des fluides. Le polyamide utilisé dans les tuyaux off shore est en général du PA 11 ou du PA 12 mais il est nécessaire d'y ajouter un plastifiant pour l'extruder plus facilement et aussi pour réduire le module de flexion. Ces polyamides conviennent mais ils ont l'inconvénient de vieillir trop vite. On entend par vieillissement une diminution des propriétés mécaniques telles que l'allongement à la rupture et la résistance à la traction. Le vieillissement est d'autant plus rapide que la température d'utilisation est élevée. On a maintenant découvert que le vieillissement était du non seulement à l'hydrolyse lente du polyamide sous l'effet de l'humidité des produits transportés mais aussi à une réorganisation de la structure microcristalline du polyamide provoquée par le départ du plastifiant. Le plastifiant est extrait par le contact avec le pétrole ou le gaz. on a donc réduit la quantité de plastifiant et avantageusement ajouté un élastomère NBR ou H-NBR (NBR hydrogéné).

Le brevet US 5614683 a décrit le suivi du vieillissement du PA 11 par l'evolution de sa masse molaire. Rien ne concerne le plastifiant et aucun remède n'est proposé.

*Brève description de l'invention*

La présente invention est une composition constituée de, en poids :

- 70 à 96% d'au moins un polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
- 5 à 9% d'un plastifiant,
- 8 à 22% d'un élastomère NBR ou H-NBR,
- la somme des quantités de plastifiant et d'élastomère est comprise entre 13 et 30%, et de manière optionnelle des additifs dans une quantité pouvant représenter jusqu'à 5 parties en poids pour 100 parties de l'ensemble du polyamide, du plastifiant et de l'élastomère.

Ces compositions peuvent être fabriquées par mélange à l'état fondu des différents constituants selon les techniques habituelles de matières thermoplastiques. Elles sont particulièrement utiles pour des tuyaux utilisés dans l'exploitation des champs de pétrole et de gaz off shore. Elles ont une très bonne résistance au vieillissement. Elles sont utiles aussi pour des tuyaux plus simples dans l'automobile, ces compositions résistant au vieillissement provoqué par la température sous le capot des automobiles et la nature des fluides transportés.

L'invention concerne aussi les tuyaux comprenant au moins une couche de cette composition. Ce sont soit des tuyaux utilisés en off shore soit des tuyaux plus simples pour l'automobile.

*Description détaillée de l'invention*

**S'agissant des polyamides** ils ont une masse moléculaire moyenne en nombre $\overline{Mn}$ en général supérieure ou égale à 25000 et avantageusement comprise entre 40000 et 100000. Leur masse moléculaire moyenne en poids $\overline{Mw}$ ϵ est en général supérieure à 40000 et avantageusement comprise entre 50000 et 100000. Leur viscosité inhérente (mesurée à 20°C pour un échantillon de 5.10-3 g par cm3 de méta-crésol) est en général supérieure à 0,7.

A titre d'exemple de polyamides aliphatiques résultant de la condensation d'une diamine aliphatique ayant de 6 à 12 atomes de carbone et d'un diacide aliphatique ayant de 9 à 12 atomes de carbone on peut citer :

le PA 6-12 résultant de la condensation de l'hexaméthylène diamine et de l'acide 1,12-dodecanedioïque,
le PA 9-12 résultant de la condensation de la diamine en C9 et de l'acide 1,12-dodecanedioïque,
le PA 10-10 résultant de la condensation de la diamine en C10 et de l'acide 1,10-decanedioïque,
le PA 10-12 résultant de la condensation de la diamine en C9 et de l'acide 1,12-dodecanedioïque.

Quant aux copolyamides 11/12 ayant soit plus de 90% de motifs 11 soit plus de 90% de motifs 12, ils résultent de la condensation de l'acide amino 1-undecanoïque avec le lauryllactame (ou l'alpha omega amino acide en C12).

Le polyamide contient un catalyseur organique ou minéral qu'on a ajouté au cours de la polycondensation. De préférence c'est de l'acide phosphorique ou hypophosphorique. La quantité de catalyseur peut être jusqu'à 3000 ppm par rapport à la quantité de polyamide et avantageusement entre 50 et 1000 ppm.

On ne sortirait pas du cadre de l'invention en utilisant un mélange de polyamides.

Avantageusement le polyamide est le PA 11 ou le PA 12.

**S'agissant du plastifiant** il est choisi parmi les dérivés de benzène sulfonamide, tels que le n-butyl benzène sulfonamide (BBSA), l'éthyl toluène sulfonamide ou le N-cyclohexyl toluène sulfonamide; les esters d'acides hydroxy-benzoïques, tels que le parahydroxybenzoate d'éthyl-2 hexyle et le parahydroxybenzoate de décyl-2 hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tels que l'oligoéthylèneoxy malonate. Un plastifiant particulièrement préféré est le n-butyl benzène sulfonamide (BBSA). On ne sortirait pas du cadre de l'invention en utilisant un mélange de plastifiants.

Le plastifiant peut être introduit dans le polyamide pendant la polycondensation ou ultérieurement.

**S'agissant de l'élastomère** ces produits sont connus en eux mêmes, ils sont décrits par exemple dans ULLMAN'S ENCYCLOPEDIA OF INDUSTRIAL CHEMISTRY, 5e éditon Vol A 23 pages 255-261, le contenu étant incorporé dans la présente demande. On préfère le NBR. L'élastomère peut aussi être réticulé, il suffit que le NBR porte des fonctions carboxyliques ou époxy et d'ajouter un réticulant pourvu que ceci ne provoque pas une dégradation du polyamide.

**S'agissant des proportions**, la proportion de plastifiant est entre 5 et 9% et celle d'élastomère est entre 8 et 22% la somme des quantités de plastifiant et d'élastomère étant comprise entre 13 et 30%.

la quantité de polyamide est avantageusement comprise entre 72 et 92% pour respectivement 28 à 8% de la somme des quantités de plastifiant et d'élastomère.

La composition de l'invention peut comprendre aussi des additifs tels que des antioxydants, des anti U.V., des pigments et des stabilisants. Ces produits sont connus en eux mêmes, ce sont ceux utilisés habituellement dans les polyamides. La quantité de ces additifs peut être représenter jusqu'à 5 parties et avantageusement entre 0,5 et 2 parties en poids pour 100 parties de l'ensemble du polyamide, du plastifiant et de l'élastomère. Cette composition est préparée par mélange à l'état fondu des différents constituants dans tout dispositif de mélange et de préférence une extrudeuse. La composition est le plus souvent récupérée sous forme de granulés. Avantageusement on ajoute du stéarate de calcium comme anti mottant à ces granulés, ceci se fait par simple mélange à sec. Ces granulés sont ensuite refondus et extrudés sur la gaine métallique qui doit former la couche intérieure du tuyau. Il est recommandé de bien sécher ces granulés avant de les fondre pour les mettre en oeuvre. Le taux d'humidité est avantageusement en dessous de 0,2% et de préférence en dessous de 0,08%.

*Exemples*

Nous avons utilisé les produits suivants :

**NBR :** Copolymère statistique Acrylonitrile (19%) / Butadiène de densité = 0,98 g/cm3 et de viscosité Mooney = 45 ± 5 ML (1+4) 100°C.

**PA11** : Polyamide 11 de densité 1,030 g/cm3 et de viscosité inhérente ISO = 1,35 dL/g.

**BBSA** : N-butyl benzène sulfonamide (plastifiant).

***Stab*** : Système d'additifs stabilisants « chaleur et lumière »

Dans tous les exemples la viscosité inhérente est mesurée à 20°C en solution à 5.10-3 g de polyamide par cm3 de metacresol. La valeur ISO corrigée de la viscosité inhérente est obtenue en utilisant la formule suivante :

$$\eta \text{ISO corrigée} = \eta \text{ mesurée} * 100 / ((100\% - X\%) * 1{,}034)$$

avec X %= taux d'extractible

Le NBR est préalablement broyé après refroidissement à l'azote liquide sur concasseur LANCELIN® (pré-broyage sur grille de 16 mm puis reprise sur grille de 6mm) en présence d'un agent anti-mottant (stéarate de calcium).

Les produits sont compoundés en extrudeuse bi-vis co-rotative de type WERNER® 40 (D/L = 40). Cette dernière comprend 10 zones numérotées de F1 à F9 et la filière. La zone d'alimentation F1 n'est pas chauffée et on adopte une profil de températures plat à 270 °C pour l'ensemble des autres zones.

Le polyamide, le NBR et l'additif *Stab* sont introduits en zone F1 sous forme d'un dry-blend (mélange à sec) par l'intermédiaire de deux doseurs pondéraux séparés.

Le plastifiant (BBSA) est introduit par une pompe doseuse en zone F6-7. Le dégazage sous vide relatif de 360 mm Hg est effectué en zone F4.

Le débit d'extrusion en sortie de la filière est de 70 kg/h pour une vitesse de rotation des vis de 300 rpm (tours par minute). Le jonc est granulé après refroidissement dans un bac à eau. Les granulés des différents essais sont alors séchés à 80°C durant 12 heures et conditionnés en sacs étanches après vérification des taux d'humidités (%eau = 0,08 %).

Le tableau 1 rassemble les compositions des différents mélanges réalisés ainsi que quelques informations obtenues lors de l'extrusion (températures et pressions en tête, couple). Les % indiqués sont des % massiques. Le vide est régulé de manière à ce que la pression en tête soit constante d'un essai à l'autre 17/18 bars.

Tableau 1

| Essais | 1 non conforme à l'invention | 2 comparatif | 3 | 4 |
|---|---|---|---|---|
| PA11 (%) | 91,8 | 86,8 | 80,1 | 73,3 |
| BBSA (%) | 7 | 12 | 8,7 | 5,5 |
| NBR | 0 | 0 | 10 | 20 |
| *Stab* (%) | 1,2 | 1,2 | 1,2 | 1,2 |
| T° mat. Tête (°C) | 279 | 277 | 279 | 285 |

(suite)

| Essais | 1 non conforme à l'invention | 2 comparatif | 3 | 4 |
|---|---|---|---|---|
| Pr. Tête (bars) | 18 | 17/18 | 9/10 | 9/10 |
| Couple (%) | 70 | 74 | 67 | 63 |

La morphologie des alliages PA11 / NBR est vérifiée par microscopie électronique à balayage (MEB) des faciès de fracture cryogénique après marquage à l'OsO$_4$. Il est observé pour les deux échantillons (essais 3 et 4) une dispersion relativement homogène des nodules de NBR dans la matrice PA11. En ce qui concerne l'essai **3** à 10% NBR, les tailles des nodules se situent globalement entre 0,1 $\mu$m et 1,5 $\mu$m. A l'exception des nodules coalescés, les tailles dans le cas de l'essai **4** à 20 % NBR se situent globalement entre 0,1 $\mu$m et 2,7 $\mu$m.

Une bande de 2 mm d'épaisseur (découpée en plaques de 200 x 200 x 2 mm$^3$) est préparée par extrusion - calandrage des granulés des essais précédents . L'extrudeuse est de type AMUT® (L/D = 32, D = 70 mm) et fonctionne avec un profil de température plat à 220°C. La calandre est de type AMUT® dotée de 5 rouleaux dont les températures respectives (°C) sont : 45/45/60/20/20.

Ces plaques sont découpées à l'emporte-pièce afin d'obtenir les différents barreaux et éprouvettes utilisés par la suite lors de la caractérisation des compositions ainsi que les études de vieillissement.

Dans le tableau 2, sont regroupées les informations relatives à la masse moléculaire des différents essais après transformation extrusion-calandrage).

Tableau 2

| Essais | 1 non conforme à l'invention | 2 | 3 | 4 |
|---|---|---|---|---|
| Visc. inh. cor ISO | 1,80 | 1,78 | - | - |
| $\overline{Mn}$ | 37800 | 40700 | 28650 | 23950 |
| $\overline{Mw}$ | 77600 | 74080 | 54850 | 51880 |

Tests de vieillissement

Le vieillissement est réalisé par conservation des éprouvettes (ou/et barreaux) immergées dans l'eau à pH 7 (ou un mélange eau/diesel 2D), à une température convenue (typiquement 110 - 140 °C);

Les échantillons sont placés dans des autoclaves (H = 32 cm, D$_{int}$ = 8 cm, V$_{int}$ = 1,5 l) à raison d'une vingtaine d'éprouvettes ISO ½ par autoclave. Celles-ci sont intégralement immergées dans 1 l d'eau distillée. Puis on réalise l'inertage de chaque autoclave par bullage d'azote durant 3 heures à un débit de N$_2$ de 50l/h (désoxygénation). La validation de la méthode d'inertage est réalisée par la mesure directe du taux d'oxygène en sortie (%O$_2$ < 2 ppm). Dans le cas d'un vieillissement réalisé dans un mélange eau / pétrole, chacun des fluides est inerté séparément durant 2 h (dans les mêmes conditions que celles décrites ci-dessus) puis réunis (ré ajustage des volumes) et à nouveau inerté durant 1 h.

Ces autoclaves ainsi inertés sont placés dans une étuve réglée à la température souhaitée (typiquement 100 - 140 °) durant toute la durée du vieillissement. Après chaque prélèvement, le fluide est remplacé puis l'autoclave est inertée. Les échantillons sont alors séchés superficiellement et stockés en conditionnement inerté avant la réalisation des différents tests d'évaluation.

Les essais en traction sont réalisés à 23 °C selon la norme ISO 527 1 BA, à l'aide d'un dynamomètre robotisé muni d'un extensomètre optique sur les éprouvettes ISO 1BA ½ découpés à l'emporte-pièce dans les plaques extrudés (voir ci-dessus). La vitesse de traction est de 25 mm/min et l'entrefer initial de 25 mm.

Les caractéristiques en flexion (module apparent d'élasticité en flexion) sont déterminés selon la norme ISO 178 :93. L'analyse est réalisée à 23 °C sur des barreaux injectés de dimension 80 x 10 x 4 mm$^3$ sur un appareil dynamométrique de type INSTRON®1175 à une vitesse de 2 mm/min.

La résistance au choc à 23°C ont été évalués sur des barreaux injectés entaillés de dimension 80 x 10 x 4 mm$^3$ selon la norme ISO 179-1/1eA. Le mouton pendule utilisé est de type ZWICK® 5102 et l'entaille pratiquée à l'aide d'une entailleuse automatique NOTCHVIS® (entaille en V de type A). La distance entre appuis est de 62 mm.

Les masses moléculaires sont déterminées par chromatographie d'exclusion stérique (CES) sur un appareil de type WATERS® ALL/GPC 150 muni d'une colonne PLgel MIXED-B 10 $\mu$m.

L'échantillon sur base PA (30 mg) est mis en solution à 130 °C durant 3h dans de l'alcool benzylique. L'analyse est également réalisée à 130°C.

Résultats

Tableau des résultats propriétés mécaniques, non vieillis.

| Essais | PA11 pur | 1 non conforme à l'invention | 2 | 3 | 4 |
|---|---|---|---|---|---|
| Module de flexion (MPa) | 1030 | 420 | 310 | 300 | 350 |
| Choc Charpy entaillé 23°C (J/m) | + | + | + | ++ | +++ |
| Traction : contrainte à la rupture (MPa) | 50 | 71.1 | 69.2 | 57.5 | 41 |
| Traction : allongement à la rupture (%) | 310 | 372 | 398 | 387 | 302 |
| Δ poids % à 125°C (Diesel 2D) | 2,5 | -3,5 | -6,5 | 1,40* | 1,46* |
| (*) essai réalisé dans l'huile ASTM n°3 (huile proche du Diesel 2D) Plus il y a de signes + meilleur est le résultat. | | | | | |

Tableau des résultats de vieillissement

| essais | | PA11 pur | 1 non conforme à l'invention | 2 | 3 | 4 |
|---|---|---|---|---|---|---|
| eau à 140°C | ½ vie traction | ++++ | +++ | + | ++ | ++ |
| | $\overline{Mw}$ ¿ à ½ vie | 31500 | 31000 | 31000 | 29000 | 29000 |
| eau à 120°C | ½ vie traction | ++++ | +++ | + | ++ | ++ |
| | $\overline{Mw}$ ¿ à ½ vie | 39000 | 39000 | 39500 | 35000 | 31000 |
| pétrole et eau à 120°C | ½ vie | +++++ | +++ | + | ++ | ++ |
| | $\overline{Mw}$ ¿ à ½ vie | id eau 120°C | id eau 120°C | id eau 120°C | id eau 120°C | id eau 120°C |

La demi vie traction est le temps au bout duquel l'allongement à la rupture a été divisé par 2.

**Evolution du comportement thermique** (cristallinité) lors de l'extraction du BBSA. On procède à l'extraction du plastifiant en plaçant quelques granulés des compositions **1** (7% de BBSA) et **2** (12% BBSA) dans un tube en verre, sous vide, à 120°C, durant 5 jours. Le taux d'extractible de ces échantillons à l'issue de ces 5 jours est alors nul. Les propriétés thermiques des échantillons avant et après extraction sont déterminées par analyse DSC. Cette analyse est réalisée sous azote selon une norme ISO 11357-1 modifiée sur un appareil de type DSC 7 PERKIN ELMER® dans les conditions suivantes :
- balayage de 20°C à 240°C.
- chauffe 1 / refroidissement / chauffe 2 : 20 / 40 / 20 °C.min$^{-1}$.

| Essais | | 1 non conforme à l'invention | 2 |
|---|---|---|---|
| Avant extraction | Tf (°C) | 184,1 | 183,7 |
| | ΔH 1$^{ère}$ chauffe (J/g) | 42,1 | 41,9 |
| | χc (%) cristallinité | 20,1 | 21,1 |
| Après extraction | Tf (°C) | 188,7 | 188,4 |
| | ΔH 1$^{ère}$ chauffe (J/g) | 46,8 | 49,1 |
| | χc (%) cristallinité | 22 | 25,6 |

**Revendications**

1. Composition constituée de, en poids :

   - 70 à 96% d'au moins un polyamide choisi parmi le PA 11, le PA 12, les polyamides aliphatiques résultant de la condensation d'une diamine aliphatique ayant de 6 à 12 atomes de carbone et d'un diacide aliphatique ayant de 9 à 12 atomes de carbone et les copolyamides 11/12 ayant soit plus de 90% de motifs 11 soit plus de 90% de motifs 12,
   ledit polyamide contenant un catalyseur organique ou minéral qu'on a ajouté au cours de la polycondensation,
   - 5 à 9% d'un plastifiant,
   - 8 à 22% d'un élastomère NBR ou H-NBR,
   - la somme des quantités de plastifiant et d'élastomère est comprise entre 13 et 30% et, de manière optionnelle,
   - des additifs dans une quantité pouvant représenter jusqu'à 5 parties en poids pour 100 parties de l'ensemble du polyamide, du plastifiant et de l'élastomère.

2. Composition selon la revendication 1, **caractérisée en ce que** le catalyseur est choisi parmi l'acide phosphorique et l'acide hypophosphorique.

3. Composition selon la revendication 1 ou 2, **caractérisée en ce que** la quantité de catalyseur représente jusqu'à 3000 ppm par rapport au polyamide.

4. Composition selon la revendication 3, **caractérisée en ce que** la quantité de catalyseur est comprise entre 50 et 1000 ppm.

5. Composition selon l'une quelconque des revendications précédentes, **caractérisée en ce que** le polyamide est choisi parmi le PA 11 et le PA 12.

6. Composition selon l'une quelconque des revendications précédentes, **caractérisée en ce que** le plastifiant est le BBSA.

7. Composition selon l'une quelconque des revendications précédentes, **caractérisé en ce que** les additifs sont des antioxydants, des anti U.V., des pigments et des stabilisants.

8. Composition selon l'une quelconque des revendications précédentes, **caractérisée en ce que** les additifs représentent entre 0,5 et 2 parties en poids pour 100 parties de l'ensemble du polyamide, du plastifiant et de l'élastomère.

9. Composition selon l'une quelconque des revendications précédentes, **caractérisée en ce que** l'élastomère est réticulé.

10. Utilisation de la composition selon l'une quelconque des revendications 1 à 9 dans l'automobile.

11. Tuyau comprenant au moins une couche constituée de la composition selon l'une quelconque des revendications 1 à 9.

12. Utilisation du tuyau selon la revendication 11 dans l'exploitation des champs de pétrole et de gaz offshore.

13. Utilisation du tuyau selon la revendication 11 dans l'automobile.

**Claims**

1. Composition made of, by weight:

   - 70 to 96% of at least one polyamide chosen from PA-11, PA-12, aliphatic polyamides resulting from the condensation of an aliphatic diamine having from 6 to 12 carbon atoms and an aliphatic diacid having from 9 to 12 carbon atoms, and 11/12 copolyamides having either more than 90% of nylon-11 units or more than 90% of nylon-12 units,
   said polyamide containing an organic or mineral catalyst which is added during the polycondensation;

- 5 to 9% of a plasticizer;
- 8 to 22% of an NBR or H-NBR elastomer;
- the sum of the amount of plasticizer and the amount of elastomer is between 13 and 30%; and optionally
- additives in an amount which can represent up to 5 parts per 100 by weight of the polyamide, plasticizer and elastomer combined.

2. Composition according to Claim 1, **characterized in that** the catalyst chosen from phosphoric acid and hypophosphoric acid.

3. Composition according to either of Claims 1 and 2, **characterized in that** the amount of catalyst represents up to 3000 ppm relative to the polyamide.

4. Composition according to Claim 3, **characterized in that** the amount of catalyst is between 50 and 1000 ppm.

5. Composition according to any one of the preceding claims, **characterized in that** the polyamide is chosen from PA-11 and PA-12.

6. Composition according to any one of the preceding claims, **characterized in that** the plasticizer is BBSA.

7. Composition according to any one of the preceding claims, **characterized in that** the additives are antioxidants, pigments, UV stabilizers and other stabilizing agents.

8. Composition according to any one of the preceding claims, **characterized in that** the additives represent between 0.5 and 2 parts per 100 by weight of the polyamide, plasticizer and elastomer combined.

9. Composition according to any one of the preceding claims, **characterized in that** the elastomer is crosslinked.

10. Use of the composition according to any one of Claims 1 to 9 in motor vehicles.

11. Tube comprising at least one layer made of the composition according to any one of Claims 1 to 9.

12. Use of the tube according to Claim 11 in the exploitation of offshore oil and gas fields.

13. Use of the tube according to Claim 11 in motor vehicles.

**Patentansprüche**

1. Zusammensetzung, bestehend aus, bezogen auf das Gewicht:

- 70 bis 96% von mindestens einem Polyamid, ausgewählt aus PA 11, PA 12, aliphatischen Polyamiden, die aus der Kondensation eines aliphatischen Diamins mit 6 bis 12 Kohlenstoffatomen und einer aliphatischen Disäure mit 9 bis 12 Kohlenstoffatomen hervorgehen, und 11/12-Co-Polyamiden mit entweder mehr als 90% Motiven 11 oder mehr als 90% Motiven 12,
wobei das Polyamid einen organischen oder anorganischen Katalysator enthält, den man im Verlauf der Polykondensation zugefügt hat,
- 5 bis 9% eines Weichmachers,
- 8 bis 22% eines Elastomers NBR oder H-NBR,
- wobei die Summe der Mengen an Weichmacher und Elastomer zwischen 13 und 30% beträgt, und gegebenenfalls
- Additive in einer Menge, die bis zu 5 Gewichtsteile pro 100 Gewichtsteile der Gesamtheit an Polyamid, Weichmacher und Elastomer ausmachen kann.

2. Zusammensetzung nach Anspruch 1, **dadurch gekennzeichnet, dass** der Katalysator aus Phosphorsäure und hypophosphoriger Säure ausgewählt wird.

3. Zusammensetzung nach Anspruch 1 oder 2, **dadurch gekennzeichnet, dass** der Katalysator bis zu 3000 ppm, bezogen auf die Menge an Polyamid, ausmacht.

**4.** Zusammensetzung nach Anspruch 3, **dadurch gekennzeichnet, dass** die Menge an Katalysator zwischen 50 und 1000 ppm beträgt.

**5.** Zusammensetzung nach einem der vorhergehenden Ansprüche, **dadurch gekennzeichnet, dass** das Polyamid aus PA 11 und PA 12 ausgewählt wird.

**6.** Zusammensetzung nach einem der vorhergehenden Ansprüche, **dadurch gekennzeichnet, dass** der Weichmacher BBSA ist.

**7.** Zusammensetzung nach einem der vorhergehenden Ansprüche, **dadurch gekennzeichnet, dass** es sich bei den Additiven um Antioxidantien, UV-Schutzmittel, Pigmente und Stabilisatoren handelt.

**8.** Zusammensetzung nach einem der vorhergehenden Ansprüche, **dadurch gekennzeichnet, dass** die Additive zwischen 0,5 und 2 Gewichtsteile pro 100 Gewichtsteile der Gesamtheit an Polyamid, Weichmacher und Elastomer ausmachen.

**9.** Zusammensetzung nach einem der vorhergehenden Ansprüche, **dadurch gekennzeichnet, dass** das Elastomer vernetzt ist.

**10.** Verwendung der Zusammensetzung nach einem der Ansprüche 1 bis 9 in einem Kraftfahrzeug.

**11.** Rohrleitung, umfassend mindestens eine Schicht, die aus der Zusammensetzung nach einem der Ansprüche 1 bis 9 besteht.

**12.** Verwendung der Rohrleitung nach Anspruch 11 bei der Nutzung von Offshore-Öl- und -Gasfeldern.

**13.** Verwendung der Rohrleitung nach Anspruch 11 in einem Kraftfahrzeug.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4950436 A
- DE 4132123
- FR 1592857
- DE 3439312
- US 4567238 A
- WO 8903861 A
- US 5614683 A

**Littérature non-brevet citée dans la description**

- ULLMAN'S ENCYCLOPEDIA OF INDUSTRIAL CHEMISTRY. vol. A 23, 255-261